# EUROPÄISCHE PATENTSCHRIFT

(11) **EP 1 433 805 B1**
(45) Veröffentlichungstag und Bekanntmachung des Hinweises auf die Patenterteilung: **27.07.2005**
(21) Anmeldenummer: 03104005.8
(22) Anmeldetag: 29.10.2003
(51) Int. Cl.: C08G 63/50, C08G 63/48, C08G 63/668, C08G 63/91, C08G 63/20, C08G 63/16, C08G 63/553, C09D 167/00, C08F 283/01, C09D 167/02, C08J 3/07, C09D 167/08, C09D 167/06

(54) **Dispersionen amorpher, ungesättigter Polyesterharze auf Basis bestimmter Dicidolisomerer**
Dispersions of amorphous, unsaturated polyester resins based on certain dicidol isomers
Dispersions des polyester résines amorphes et non saturées à base des certaines dicidol isomères

(30) Priorität: 24.12.2002 DE 10261006
(43) Veröffentlichungstag der Anmeldung: 30.06.2004
(73) Patentinhaber: Degussa AG, 40474 Düsseldorf (DE)
(72) Erfinder: Glöckner, Patrick, Dr., 40885, Ratingen (DE); Ortelt, Martina, Dr., 48249, Dülmen (DE); Andrejewski, Werner, 46284, Dorsten (DE); Cerri, Alessandro, Dr., 48301, Nottuln (DE); Mindach, Lutz, Dr., 45770, Marl (DE); Kohlstruk, Stephan, Dr., 48249, Dülmen (DE)

(56) Entgegenhaltungen:
- DE-A- 2 245 110
- GB-A- 1 046 014
- GB-A- 1 163 852
- GB-A- 1 604 689
- US-A- 4 555 564
- US-A- 5 648 410
- US-A- 6 143 841

## Beschreibung

Die Erfindung betrifft Dispersionen amorpher, ungesättigter Polyesterharze auf Basis bestimmter Dicidolisomerer und Säuren.

Ungesättigte Polyesterharze (UP-Harze) sind bekannt. Sie werden durch Kondensation von gesättigten und ungesättigten Dicarbonsäuren oder deren Anhydriden mit Diolen hergestellt. Ihre Eigenschaften hängen weitgehend von Art und Mengenverhältnis der Ausgangsstoffe ab.

Als Träger der polymerisationsfähigen Doppelbindungen werden meist α,β-ungesättigte Säuren verwendet, in erster Linie Maleinsäure bzw. deren Anhydrid oder Fumarsäure; ungesättigte Diole sind von untergeordneter Bedeutung. Je höher der Gehalt an Doppelbindungen, d. h. je kürzer der Abstand der Doppelbindungen in den Kettenmolekülen ist, um so reaktiver ist das Polyesterharz. Es polymerisiert sehr rasch unter starker Wärmeentwicklung und hoher Volumenschrumpfung zu einem hochvemetzten und daher verhältnismäßig spröden Endprodukt. Man "verdünnt" deshalb die reaktionsfähigen Doppelbindungen im Polyestermolekül durch Einkondensieren gesättigter aliphatischer oder aromatischer Dicarbonsäuren. Als Alkoholkomponenten werden geradkettige und verzweigte Diole verwendet. Die einzelnen UP-Harztypen unterscheiden sich nicht nur durch die zu ihrer Herstellung verwendeten Komponenten sondern auch durch das Mengenverhältnis von gesättigten zu ungesättigten Säuren, das die Vemetzungsdichte bei der Polymerisation bestimmt, den Kondensationsgrad, d. h. die Molmasse, die Säure- und OH-Zahl, d. h. die Art der Endgruppen in den Kettenmolekülen, den Monomergehalt, die Art der Zusätze (Ullmann's Encyclopedia of Industrial Chemistry, VOL A21, S. 217 ff., 1992).

UP-Harze auf Basis von Dicidol als Diolkomponente sind z. B. bekannt aus DE 924 889, DE 953 117, DE 22 45 110, DE 27 21 989, EP 0 114 208, EP 0 934 988.

Aufgabe der vorliegenden Erfindung war es, aus der Vielzahl der Möglichkeiten und Variationsbreite des Standes der Technik neue urthanisierte, ungesättigte und amorphe Polyesterharze zu finden, die außerdem wasserdispergierbar und als Feststoff transparent sind. Die Aufgabe wurde wie nunmehr erläutert gelöst.

Gegenstand der Erfindung sind wässrige Dispersionen von amorphen, ungesättigten Polyesterharzen,
wobei das Polyesterharz aufgebaut ist aus
I. einer Alkoholkomponente,
II. 20 bis 95 mol-% einer α, β ungesättigten Carbonsäurekomponente
   und
   0 bis 75 mol-% einer weiteren Carbonsäurekomponente,
III. 5 bis 40 mol-% Trimellithsäure(anhydrid),
dadurch gekennzeichnet,
dass die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0 ^{2,6}]decan und 5,8-Bis(hydroxymethyl)tricyclo [5.2.1.0 ^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die wässrigen Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas aufweisen.

Die erfindungsgemäßen Dispersionen der amorphen, ungesättigten Polyesterharze werden durch Polykondensation der Alkoholkomponente und der Säurekomponenten anschließender Dispergierung in Wasser nach Neutralisation erhalten.

Als Alkoholkomponente wird erfindungsgemäß ein Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan eingesetzt, wobei jedes Isomere zu einem Anteil von 20 bis 40 % in dem Gemisch enthalten sein kann und die Summe der drei Isomeren 90 bis 100 %, bevorzugt 95 bis 100 % ergibt, und das Gemisch mindestens zu 10 Gew.-% in der Alkoholkomponente des Polyesters vorhanden ist. Der Isomergehalt des Dicidolgemisches kann qualitativ und quantitativ z. B. durch GC-Analyse oder quantitativ durch Trennung mittels präparativer GC oder HPLC und anschließender NMR-Spektroskopie bestimmt werden. Alle entsprechenden Isomeren des Dicidols in 9-Stellung sind genau so geeignet, aber auf Grund der Spiegelsymmetrie von den o. g. Isomeren, wie auch die cis- und trans-Isomeren, unter normalen, praxisbezogenen Umständen nicht unterscheidbar. Außerdem kann das Dicidolgemisch bis zu 10 % weitere Isomere des Dicidol und/oder trimere und/oder höhere isomere Diole des Diels-Alder-Umsetzungsproduktes aus Cyclopentadien enthalten. Bevorzugt besteht die Alkoholkomponente aus 20 %, aus 30 %, bevorzugt aus 60 %, besonders bevorzugt aus 100 % Dicidolgemisch, wobei dieses besonders bevorzugt 95 bis 100 % der oben genannten drei isomeren Verbindungen enthält.

Neben dem Dicidolgemisch kann die Alkoholkomponente maximal 90 Gew.-% weitere lineare und/oder verzweigte, aliphatische und/oder cycloaliphatische und/oder aromatische Diole und/oder Polyole enthalten. Bevorzugt werden als zusätzliche Alkohole Ethylenglykol, 1,2-und/oder 1,3-Propandiol, Diethylen-, Dipropylen-, Triethylen-, Tetraethylenglykol, 1,2-und/oder 1,4-Butandiol, 1,3-Butylethylpropandiol, 1,3-Methylpropandiol, 1,5-Pentandiol, Bisphenol A, B, C, F, Norbornylenglykol, 1,4-Benzyldimethanol und -ethanol, 2,4-Dimethyl-2-ethylhexan-1,3-diol, Cyclohexandimethanol, Glycerin, Hexandiol, Neopentylglycol, Trimethylolethan, Trimethylolpropan und/oder Pentaerythrit eingesetzt.

Die erfindungsgemäßen amorphen, ungesättigten Polyesterharze enthalten als Ausgangssäurekomponente II. mindestens 20 bis 95 mol-%, bevorzugt 30 bis 90 mol-%, besonders bevorzugt 35 bis 85 mol-%, einer α,β-ungesättigten Dicarbonsäure. Bevorzugt werden Citracon-, Fumar-, Itacon-, Malein- und/oder Mesaconsäure verwendet. Ganz besonders bevorzugt werden Fumar- und/oder Maleinsäure(anhydrid) eingesetzt.

Es können auch zusätzlich aromatische und/oder aliphatische und/oder cycloaliphatische Monocarbonsäuren und/oder Dicarbonsäuren und/oder Polycarbonsäuren in Mengen von bis zu 75 mol-%, bevorzugt bis zu 60, besonders bevorzugt bis zu 50 mol-%, enthalten sein, wie z. B. Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Pyromellithsäure, Isononansäure, 2-Ethylhexansäure. Bevorzugt sind Phthalsäure, Hexahydrophthalsäure, Tetrahydrophthalsäure, Hexahydroterephthalsäure, Adipin- und/oder Azelainsäure.

Außerdem sind 5 bis 40 mol-%, bevorzugt 10 bis 35 mol-%, besonders bevorzugt 15 bis 30 mol-% Trimellithsäure(anhydrid) als Komponente III. enthalten.

Die Säurekomponente kann teilweise oder vollständig aus Anhydriden und/oder niedermolekularen Alkylestem, bevorzugt Methylestern und / oder Ethylestem, bestehen.

Im Allgemeinen ist die Alkoholkomponente im Mol-Verhältnis von 0,5 bis 2,0 zu 1 zur Säurekomponente II. enthalten, bevorzugt 0,8 bis 1,5 zu 1. Besonders bevorzugt findet die Umsetzung der Alkoholkomponente im Mol-Verhältnis von 1,0 bis 1,3 zu 1 zur Säurekomponente II. statt.

Die erfindungsgemäßen ungesättigten, amorphen Polyesterharze weisen eine Säurezahl zwischen 1 und 200 mg KOH/g, bevorzugt zwischen 1 und 100, besonders bevorzugt zwischen 10 und 50 mg KOH/g sowie eine OH-Zahl zwischen 1 und 200 mg KOH/g, bevorzugt zwischen 1 und 100, besonders bevorzugt zwischen 10 und 80 mg KOH/g auf.

Der Tg der erfindungsgemäßen ungesättigten, amorphen Polyester variiert von -30 bis +80 °C, bevorzugt -20 bis +50 °C, besonders bevorzugt -10 bis +40 °C.

In einer bevorzugten Ausführungsform I bestehen die erfindungsgemäßen amorphen, ungesättigten Polyesterharze aus einer Alkoholkomponente mit mindestens 80 %, 90 %, bevorzugt 95 %, besonders bevorzugt zu 100 % des Dicidolgemisches der isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan und aus Fumarsäure und/oder Maleinsäure(anhydrid) und Trimellithsäure(anhydrid).

In einer weiteren bevorzugten Ausführungsform II enthalten die Polyesterharze die o. g. Ausgangskomponenten wie unter I und zusätzlich eine weitere Säurekomponente II. ausgewählt aus Adipinsäure oder Phthalsäure(anhydrid), wobei das Verhältnis der α, β-ungesättigten zur zusätzlichen Säure von 3 zu 1 bis 1 zu 4 variieren kann. Bevorzugt werden Verhältnisse von ca. 1 zu 1 bis 1 zu 2. Die Polyester weisen allgemein Säurezahlen von 1 bis 200, bevorzugt 1 bis 100, besonders bevorzugt 10 bis 50 mg KOH/g, und OH-Zahlen von 1 bis 200, bevorzugt 1 bis 100, besonders bevorzugt 10 bis 80 mg KOH/g auf.

Die erfindungsgemäßen Dispersionen amorpher, ungesättigter Polyesterharze können auch Hilfs- und Zusatzstoffe ausgewählt aus Inhibitoren, Lösemitteln, Neutralisationsmitteln, grenzflächenaktiven Substanzen, Sauerstoff- und/oder Radikalfängern, Katalysatoren, Lichtschutzmitteln, Farbaufhellem, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzmitteln, internen Trennmitteln, Füllstoffen und/oder Treibmitteln, enthalten.

Gegenstand der Erfindung ist auch ein Verfahren zur Herstellung wässriger Dispersionen von amorphen, ungesättigten Polyesterharzen,
wobei das Polyesterharz aufgebaut ist aus
I. einer Alkoholkomponente,
II. 20 bis 95 mol-% einer α, β ungesättigten Carbonsäurekomponente
   und
   0 bis 75 mol-% einer weiteren Carbonsäurekomponente,
III. 5 bis 40 mol-% Trimellithsäure(anhydrid),
und wobei die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0 ^{2,6}]decan und 5,8-Bis(hydroxymethyl)tricyclo [5.2.1.0^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas
aufweisen,
durch Umsetzung der Ausgangskomponenten I. und II. und folgender Reaktion mit Komponente III., bei einer Temperatur von 150 bis 270 °C und das erhaltene Polyesterharz nach Neutralisation in die wässrige Phase dispergiert wird.

Hergestellt werden die erfmdungsgemäßen Polyesterharze durch (halb)kontinuierliche oder diskontinuierliche Veresterung der Ausgangssäuren II. und -alkohole I. und anschließender Umsetzung mit Komponente III. in einstufiger oder mehrstufiger Fahrweise, Neutralisation und anschließender Dispergierung.

Die Umsetzung von I., II. und III. zur Herstellung der ungesättigten, amorphen Polyester, wie oben beschrieben, wird bevorzugt in einer Inertgasatmosphäre bei 150 bis 270 °C, bevorzugt bei 160 bis 230 °C, besonders bevorzugt bei 160 bis 210 °C durchgeführt. Als Inertgas können Stickstoff oder Edelgase, insbesondere Stickstoff eingesetzt werden. Das Inertgas weist einen Sauerstoffgehalt von weniger als 50 ppm, insbesondere weniger als 20 ppm, auf.

Die erfindungsgemäßen Polyesterharze werden mit einem geeigneten Neutralisationsmittel wie z. B. einem Amin oder einer anorganischen Lauge, bevorzugt sind Ammoniak, Dimethylethanolamin, Triethylamin und/oder NaOH, teilweise oder vollständig neutralisiert. Der Neutralisationsgrad liegt zwischen 0,3 und 1,2, bevorzugt zwischen 0,4 und 1,1, besonders bevorzugt zwischen 0,6 und 1,05, wodurch dann ein wasserverdünnbarer amorpher, ungesättigter Polyester erhalten wird. Dieser wird ggf. unter Verwendung bis zu 60-Gew.-% eines geeigneten Hilfslösemittels in Wasser dispergiert. Als geeignete Hilfslösemittel werden niedrigsiedende inerte Lösemittel eingesetzt, die mit Wasser zumindest über weite Bereiche keine Mischungslücke bilden, einen Siedepunkt bei Atmosphärendruck unterhalb 100 °C besitzen und sich daher gewünschtenfalls durch Destillation leicht bis auf einen Restgehalt von kleiner 2 Gew.-% und insbesondere von kleiner 0,5 Gew.-% bezogen auf die fertige Dispersion abtrennen und wiederverwenden lassen. Geeignete Lösemittel dieser Art sind z. B. Aceton, Methylethylketon oder Tetrahydrofuran. Grundsätzlich geeignet sind auch höhersiedende Lösemittel wie z. B. n-Butylglykol, Di-n-butylglykol und N-Methylpyrrolidon, die dann in der wasserverdünnbaren Dispersion verbleiben. Das eingesetzte Hilfslösemittel kann je nach Anwendungszweck der Dispersion abschließend aus der resultierenden Dispersion destillativ entfernt werden.

Die erfindungsgemäßen wässrigen Dispersionen amorpher, ungesättigter Polyester werden durch die folgenden Beispiele näher erläutert:

### Beispiele

Ausgangskomponente Dicidolgemisch (Anspruch 1) im Isomerverhältnis von annähernd 1 : 1 : 1

### Beispiel Polyester 1

2,2 mol Adipinsäure werden mit 6,8 mol Dicidol bei 210 °C in Stickstoffatmosphäre zur Reaktion gebracht bis eine Säurezahl unter 5 mg KOH/g erreicht ist. Dann werden 2,2 mol Fumarsäure und 0,04 % Hydrochinon Monomethylether zugegeben. Nach 2 h Rühren wird ein Vakuum von 20 mbar angelegt, bis eine Säurezahl unter 5 mg KOH/g erreicht ist. 1300 g des hergestellten Polyesters werden mit 150 g Trimellithsäureanhydrid versetzt und 1,5 h bei 200 °C gerührt, bis eine Säurezahl von ca. 30 mg KOH/g erreicht ist. Kennzahlen:
Mₙ: 2500 g/mol, M_{w}: 12000 g/mol, Säurezahl: 31 mg KOH/g, Hydroxylzahl: 66 mg KOH/g, Tg: 35 °C.

### Beispiel Polyester 2

4,44 mol Dicidol, 4,30 mol Hexandiol und 3,3 mol Adipinsäure werden bei 210 °C bis zu einer Säurezahl von ca. 5 mg KOH/g in Stickstoffatmosphäre gerührt. Dann werden 3,3 mol Maleinsäureanhydrid und 0,1 % Hydrochinon zugegeben und bis zu einer Säurezahl unter 1 mg KOH/g gehalten, wobei in der Endphase der Kondensation ein Vakuum von 20 mbar angelegt wird. Sodann werden 0,5 mol Trimellithsäureanhydrid zugegeben und es wird bis zu einer Säurezahl von ca. 30 mg KOH/g gehalten.
Kennzahlen:
Mₙ: 2000 g/mol, Säurezahl: 27 mg KOH/g, Hydroxylzahl: 55 mg KOH/g, Tg: -9 °C

### Beispiel zur Herstellung einer wässrigen Dispersion I

Der Polyester nach Beispiel 1 wird 50%ig in Aceton gelöst. Dann wird (Dimethylethanolamin) DMEA zugegeben (Neutralisationsgrad 1,0). Nach Zugabe von Wasser wird das Aceton abdestilliert. Es wird eine lagerstabile Dispersion erhalten, die einen Festkörper von ca. 36 % besitzt.
Kennzahlen:
Säurezahl: 27 mg KOH/g, Viskosität_{D = 200}: 180 mPas, pH: 7,8, Feststoffanteil: 36,0 %

### Beispiel zur Herstellung einer wässrigen Dispersion II

Der Polyester nach Beispiel 2 wird 60 %ig in Aceton gelöst. Dann wird DMEA zugegeben (Neutralisationsgrad 0,7). Nach Zugabe von Wasser wird das Aceton abdestilliert. Es wird eine lagerstabile Dispersion erhalten, die einen Festkörper von ca. 37 % besitzt.
Kennzahlen:
Säurezahl : 25 mg KOH/g, ViskoSität_{D = 200}: 155 mPas, pH : 7,5, Feststoffanteil : 37,5 %

### Beispiel zur Herstellung einer wässrigen Dispersion III

Der Polyester nach Beispiel 2 wird in einem geschlossenen Behälter bei etwa 120 °C aufgeschmolzen, mit DMEA entsprechend eines Neutralisationsgrades von 1,0 versetzt und unter starkem Rühren mit Wasser versehen. Nach Abkühlung auf Raumtemperatur erhält man eine lagerstabile Dispersion mit einem Festkörpergehalt von ca. 38 %.
Kennzahlen:
Säurezahl: 27 mg KOH/g, Viskosität_{D = 200}: 85 mPas, pH: 7,7, Feststoffanteil: 38,5 %

## Patentansprüche

1. Wässrige Dispersionen von amorphen, ungesättigten Polyesterharzen,
wobei das Polyesterharz aufgebaut ist aus
I. einer Alkoholkomponente,
II. 20 bis 95 mol-% einer α, β ungesättigten Carbonsäurekomponente
und
0 bis 75 mol-% einer weiteren Carbonsäurekomponente,
III. 5 bis 40 mol-% Trimellithsäure(anhydrid),
**dadurch gekennzeichnet,**
**dass** die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0 ^{2,6}]decan und 5,8-Bis(hydroxymethyl)tricyclo [5.2.1.0 ^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die wässrigen Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas aufweisen.

2. Wässrige Dispersionen nach Anspruch 1,
**dadurch gekennzeichnet,**
**dass** bis zu 10 % weitere Isomere des Dicidols und/oder trimere und/oder höhere isomere Diole des Diels-Alder-Umsetzungsproduktes aus Cyclopentadien enthalten sind.

3. Wässrige Dispersionen nach mindestens einem der vorherigen Ansprüche,
**dadurch gekennzeichnet,**
**dass** die Alkoholkomponente zu mindestens zu 20 mol-% aus Dicidol besteht.

4. Wässrige Dispersionen nach mindestens einem der vorherigen Ansprüche,
**dadurch gekennzeichnet,**
**dass** die Alkoholkomponente zu mindestens zu 30 mol-% aus den Diciol besteht.

5. Wässrige Dispersionen nach mindestens einem der vorherigen Ansprüche,
**dadurch gekennzeichnet,**
**dass** die Alkoholkomponente zu mindestens 60 % aus Dicidol besteht.

6. Wässrige Dispersionen nach mindestens einem der vorherigen Ansprüche,
**dadurch gekennzeichnet,**
**dass** die Alkoholkomponente zu 100 mol-% aus den Dicidol besteht.

7. Wässrige Dispersionen nach mindestens einem der vorherigen Ansprüche,
**dadurch gekennzeichnet,**
**dass** die Alkoholkomponente maximal 90 mol-% weitere lineare und/oder verzweigte, aliphatische und/oder cycloaliphatische und/oder aromatische Diole und/oder Polyole enthält.

8. Wässrige Dispersionen nach einem der vorherigen Ansprüche,
**dadurch gekennzeichnet,**
**dass** als zusätzliche Alkohole Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit Bisphenol A, B, C, F, Norbornylenglykol, 1,4-Benzyldimethanol und - ethanol, 2,4-Dimethyl-2-ethylhexan-1,3-diol enthalten sind.

9. Wässrige Dispersionen nach mindestens einem der vorherigen Ansprüche,
**dadurch gekennzeichnet,**
**dass** als α, β-ungesättigte Säurekomponente II. Citracon-, Fumar-, Itacon-, Malein- und/oder Mesaconsäure enthalten sind.

10. Wässrige Dispersionen nach einem der vorherigen Ansprüche,
**dadurch gekennzeichnet,**
**dass** als α, β-ungesättigte Säurekomponente II. Fumarsäure und/oder Maleinsäure(anhydrid) enthalten sind.

11. Wässrige Dispersionen nach einem der vorherigen Ansprüche,
**dadurch gekennzeichnet,**
**dass** als weitere Säurekomponente II. aromatische und/oder aliphatische und/oder cycloaliphatische Monocarbonsäuren und/oder Dicarbonsäuren und/oder Polycarbonsäuren enthalten sind.

12. Wässrige Dispersionen nach Anspruch 11,
**dadurch gekennzeichnet,**
**dass** als weitere Säurekomponente II. Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure und/oder Pyromellithsäure, deren Säureanhydride und/oder Methylester sowie Isononansäure und/oder 2-Ethylhexansäure enthalten sind.

13. Wässrige Dispersionen nach Anspruch 12,
**dadurch gekennzeichnet,**
**dass** als weitere Säurekomponente II. Adipinsäure und/oder Phthalsäure(anhydrid) enthalten sind.

14. Wässrige Dispersionen nach mindestens einem der vorherigen Ansprüche,
**dadurch gekennzeichnet,**
**dass** die Säurekomponenten II. teilweise oder ganz aus Anhydriden und/oder Alkylestern bestehen.

15. Wässrige Dispersionen nach mindestens einem der vorherigen Ansprüche,
**dadurch gekennzeichnet,**
**dass** die Alkoholkomponente des Polyesterharzes im Mol-Verhältnis von 0,5 bis 2,0 zu 1 zur Säurekomponente II. enthalten ist.

16. Wässrige Dispersionen nach mindestens einem der vorherigen Ansprüche,
**dadurch gekennzeichnet,**
**dass** die Alkoholkomponente des Polyesterharzes im Mol-Verhältnis von 0,8 bis 1,5 zu 1 zur Säurekomponente II. enthalten ist.

17. Wässrige Dispersionen nach mindestens einem der vorherigen Ansprüche,
**dadurch gekennzeichnet,**
**dass** die Alkoholkomponente des Polyesterharzes im Mol-Verhältnis von 1,0 bis 1,3 zu 1 zur Säurekomponente enthalten ist.

18. Wässrige Dispersionen nach mindestens einem der vorherigen Ansprüche,
**dadurch gekennzeichnet,**
**dass** die Polyesterharze eine Säurezahl zwischen 1 und 200 mg KOH/g, bevorzugt zwischen 1 und 100, besonders zwischen 10 und 80 mg KOH/g aufweisen.

19. Wässrige Dispersionen nach mindestens einem der vorherigen Ansprüche,
**dadurch gekennzeichnet,**
**dass** die Polyesterharze eine OH-Zahl zwischen 1 und 200 mg KOH/g, bevorzugt zwischen 1 und 100, besonders bevorzugt zwischen 10 und 80 mg KOH/g aufweisen.

20. Wässrige Dispersionen nach mindestens einem der vorherigen Ansprüche,
**dadurch gekennzeichnet,**
**dass** Hilfs- und Zusatzstoffe enthalten sind.

21. Wässrige Dispersionen nach mindestens einem der vorherigen Ansprüche,
**dadurch gekennzeichnet,**
**dass** Hilfs- und Zusatzstoffe, ausgewählt aus Inhibitoren, Neutralisationsmitteln, grenzflächenaktiven Substanzen, Sauerstoff- und/oder Radikalfängern, Katalysatoren, Lichtschutzmitteln, Farbaufhellem, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzmitteln, internen Trennmitteln, Füllstoffen und/oder Treibmitteln, enthalten sind.

22. Wässrige Dispersionen nach mindestens einem der vorherigen Ansprüche,
**dadurch gekennzeichnet,**
**dass** die Alkoholkomponente des ungesättigten, amorphen Polyesterharzes aus mindestens 80 % Dicidolgemisch besteht und Fumarsäure und/oder Maleinsäure(anhydrid) enthalten ist.

23. Wässrige Dispersionen nach einem der vorherigen Ansprüche,
**dadurch gekennzeichnet,**
**dass** im amorphen, ungesättigten Polyesteharzes zusätzlich Adipinsäure und/oder Phthalsäure(anhydrid) als Säurekomponente enthalten sind in einem Verhältnis α, β-ungesättigte zur zusätzlichen Säure von 3 zu 1 bis 1 zu 4, bevorzugt von 1 zu 1 bis 1 zu 2.

24. Wässrige Dispersionen nach mindestens einem der vorherigen Ansprüche,
**dadurch gekennzeichnet,**
**dass** ein Teil der Säuregruppen des ungesättigten, amorphen Polyester-harzes neutralisiert sind.

25. Wässrige Dispersionen eines amorphen, ungesättigten Polyesterharzes nach einem der vorherigen Ansprüche,
**dadurch gekennzeichnet,**
**dass** zur Neutralisation ein Amin und/oder eine anorganische Lauge verwendet wird.

26. Wässrige Dispersionen eines amorphen, ungesättigten Polyesterharzes nach einem der vorherigen Ansprüche,
**dadurch gekennzeichnet,**
**dass** der Neutralisationsgrad zwischen 0,3 und 1,2, bevorzugt zwischen 0,4 und 1,1, besonders bevorzugt zwischen 0,6 und 1,05 liegt.

27. Verfahren zur Herstellung wässriger Dispersionen von amorphen, ungesättigten Polyesterharzen,
wobei das Polyesterharz aufgebaut ist aus
I. einer Alkoholkomponente,
II. 20 bis 95 mol-% einer α, β ungesättigten Carbonsäurekomponente
und
0 bis 75 mol-% einer weiteren Carbonsäurekomponente,
III. 5 bis 40 mol-% Trimellithsäure(anhydrid),
und wobei die Alkoholkomponente aus einem Dicidolgemisch der isomeren Verbindungen 3,8-Bis(hydroxymethyl)tricyclo [5.2.1.0^{2,6}]decan, 4,8-Bis(hydroxymethyl)tricyclo [5.2.1.0 ^{2,6}]decan und 5,8-Bis(hydroxymethyl)tricyclo [5.2.1.0 ^{2,6}]decan besteht,
wobei jedes Isomere zu einem Anteil von 20 bis 40 % in dem Gemisch enthalten sein kann und die Summe der drei Isomeren 90 bis 100 % ergibt,
und das Gemisch mindestens zu 10 bis 100 mol-% in der Alkoholkomponente des Polyesters vorhanden ist,
und die wässrigen Dispersionen
a) einen Gehalt an nichtflüchtigen Bestandteilen von 20 Gew.-% bis 60 Gew.-%,
b) einen Lösemittelgehalt von 0 bis 60 Gew.-%,
c) einen pH-Wert zwischen 5,0 und 9,5,
d) eine Viskosität bei 20 °C von 20 bis 500 mPas
aufweisen,
durch Umsetzung der Ausgangskomponenten I. und II. und folgender Reaktion mit der Komponente III. bei einer Temperatur von 150 bis 270 °C und das erhaltene Polyesterharz nach Neutralisation in die wässrige Phase dispergiert wird.

28. Verfahren nach Anspruch 27,
**dadurch gekennzeichnet,**
**dass** die Umsetzung der Ausgangskomponenten I., II. und III. bei einer Temperatur von 160 bis 230 °C, bevorzugt bei 160 bis 210 °C, erfolgt.

29. Verfahren nach Anspruch 27 bis 28,
**dadurch gekennzeichnet**,
die Umsetzung in einer Inertgasatmosphäre erfolgt.

30. Verfahren nach Anspruch 27 bis 29,
**dadurch gekennzeichnet,**
**dass** das Inertgas einen Sauerstoffgehalt von weniger als 50 ppm aufweist.

31. Verfahren nach Anspruch 27 bis 30,
**dadurch gekennzeichnet,**
**dass** Ausgangskomponenten nach den Ansprüchen 2 bis 30 eingesetzt werden.

32. Verfahren nach Anspruch 27 bis 31,
**dadurch gekennzeichnet,**
**dass** das amorphe, ungesättigte Polyesterharz unter Verwendung eines organischen Hilfslösemittels in Wasser dispergiert wird.

33. Verfahren nach Anspruch 32,
**dadurch gekennzeichnet,**
**dass** das organische Hilfslösemittel abdestilliert wird.

## Claims

1. An aqueous dispersion of an amorphous unsaturated polyester resin,
the polyester resin being synthesized from
I. an alcohol component,
II. from 20 to 95 mol% of an α,β-unsaturated carboxylic acid component
and
from 0 to 75 mol% of a further carboxylic acid component,
III. from 5 to 40 mol% of trimellitic acid (anhydride),
**characterized in that**
the alcohol component comprises a Dicidol mixture of the isomeric compounds 3,8-bis(hydroxymethyl)tricyclo[5.2.1.0²,⁶]decane, 4,8-bis(hydroxymethyl)tricyclo [5.2.1.0²,⁶] decane and 5, 8-bis(hydroxymethyl) tricyclo[5.2.1.0²,⁶]decane, it being possible for each isomer to be present in a fraction of from 20 to 40% in the mixture, and the sum of the three isomers being from 90 to 100%,
and the mixture is present at from at least 10 up to 100 mol% in the alcohol component of the polyester, and the aqueous dispersion has
a) a nonvolatiles content of from 20% to 60% by weight,
b) a solvent content of from 0 to 60% by weight,
c) a pH of from 5.0 to 9.5, and
d) a viscosity at 20°C of from 20 to 500 mPas.

2. An aqueous dispersion according to claim 1, **characterized in that** it comprises up to 10% of further isomers of Dicidol and/or trimeric and/or higher isomeric diols of the Diels-Alder reaction product from cyclopentadiene.

3. An aqueous dispersion according to at least one of the preceding claims, **characterized in that** at least 20 mol% of the alcohol component comprises Dicidol.

4. An aqueous dispersion according to at least one of the preceding claims, **characterized in that** at least 30 mol% of the alcohol component comprises Dicidol.

5. An aqueous dispersion according to at least one of the preceding claims, **characterized in that** at least 60 mol% of the alcohol component comprises Dicidol.

6. An aqueous dispersion according to at least one of the preceding claims, **characterized in that** 100 mol% of the alcohol component comprises Dicidol.

7. An aqueous dispersion according to at least one of the preceding claims, **characterized in that** the alcohol component contains not more than 90 mol% of further linear and/or branched, aliphatic and/or cycloaliphatic and/or aromatic diols and/or polyols.

8. An aqueous dispersion according to any one of the preceding claims, **characterized in that** it comprises as additional alcohols ethylene glycol, 1,2-and/or 1,3-propanediol, diethylene glycol, dipropylene glycol, triethylene glycol, tetraethylene glycol, 1,2-and/or 1,4-butanediol,1,3-butylethylpropanediol, 1,3-methylpropanediol,1,5-pentanediol, cyclohexanedimethanol, glycerol, hexanediol, neopentylglycol, trimethylolethane, trimethylolpropane and/or pentaerythritol, bisphenol A, B, C or F, norbornylene glycol, 1,4-benzyldimethanol or ethanol, or 2,4-dimethyl-2-ethylhexane-1,3-diol.

9. An aqueous dispersion according to at least one of the preceding claims, **characterized in that** it comprises as α,β-unsaturated acid component II citraconic, fumaric, itaconic, maleic and/or mesaconic acid.

10. An aqueous dispersion according to any one of the preceding claims, **characterized in that** it comprises as α,β-unsaturated acid component II fumaric acid and/or maleic acid (anhydride).

11. An aqueous dispersion according to any one of the preceding claims, **characterized in that** it comprises as further acid component II aromatic and/or aliphatic and/or cycloaliphatic monocarboxylic acids and/or dicarboxylic acids and/or polycarboxylic acids.

12. An aqueous dispersion according to claim 11, **characterized in that** it comprises as further acid component II phthalic acid, isophthalic acid, terephthalic acid, 1,4-cyclohexanedicarboxylic acid, succinic acid, sebacic acid, methyltetrahydrophthalic acid, methylhexahydrophthalic acid, hexahydrophthalic acid, tetrahydrophthalic acid, dodecanedioic acid, adipic acid, azelaic acid and/or pyromellitic acid, the anhydrides and/or methyl esters thereof, and also isononanoic acid and/or 2-ethylhexanoic acid.

13. An aqueous dispersion according to claim 12, **characterized in that** it comprises as further acid component II adipic acid and/or phthalic acid (anhydride).

14. An aqueous dispersion according to at least one of the preceding claims, **characterized in that** the acid components II comprise in whole or in part anhydrides and/or alkyl esters.

15. An aqueous dispersion according to at least one of the preceding claims, **characterized in that** it comprises the alcohol component of the polyester resin in a molar ratio of from 0.5 to 2.0:1 with respect to the acid component II.

16. An aqueous dispersion according to at least one of the preceding claims, **characterized in that** it comprises the alcohol component of the polyester resin in a molar ratio of from 0.8 to 1.5:1 with respect to the acid component II.

17. An aqueous dispersion according to at least one of the preceding claims, **characterized in that** it comprises the alcohol component of the polyester resin in a molar ratio of from 1.0 to 1.3:1 with respect to the acid component.

18. An aqueous dispersion according to at least one of the preceding claims, **characterized in that** the polyester resin has an acid number of from 1 to 200 mg KOH/g, preferably from 1 to 100, in particular from 10 to 80 mg KOH/g.

19. An aqueous dispersion according to at least one of the preceding claims, **characterized in that** the polyester resin has an OH number of from 1 to 200 mg KOH/g, preferably from 1 to 100, particularly preferably from 10 to 80 mg KOH/g.

20. An aqueous dispersion according to at least one of the preceding claims, **characterized in that** it comprises auxiliaries and additives.

21. An aqueous dispersion according to at least one of the preceding claims, **characterized in that** it comprises auxiliaries and additives selected from inhibitors, neutralizing agents, surfactants, oxygen scavengers and/or free-radical scavengers, catalysts, light stabilizers, colour brighteners, photosensitizers, thixotropic agents, antiskinning agents, defoamers, antistats, thickeners, thermoplastic additives, dyes, pigments, flame retardants, internal release agents, fillers and/or blowing agents.

22. An aqueous dispersion according to at least one of the preceding claims, **characterized in that** the alcohol component of the unsaturated amorphous polyester resin comprises at least 80% of Dicidol mixture, and fumaric acid and/or maleic acid (anhydride) is present.

23. An aqueous dispersion according to any one of the preceding claims, **characterized in that** the amorphous unsaturated polyester resin further comprises adipic acid and/or phthalic acid (anhydride) as acid component, in a ratio of α, β-unsaturated acid to additional acid of from 3:1 to 1:4, preferably from 1:1 to 1:2.

24. An aqueous dispersion according to at least one of the preceding claims, **characterized in that** some of the acid groups of the unsaturated amorphous polyester resin have been neutralized.

25. An aqueous dispersion of an amorphous unsaturated polyester resin according to any one of the preceding claims, **characterized in that** an amine and/or an inorganic hydroxide solution is used for the neutralization.

26. An aqueous dispersion of an amorphous unsaturated polyester resin according to any one of the preceding claims, **characterized in that** the degree of neutralization is from 0.3 to 1.2, preferably from 0.4 to 1.1, more preferably from 0.6 to 1.05.

27. A process for producing an aqueous dispersion of an amorphous unsaturated polyester resin,
the polyester resin being synthesized from
I. an alcohol component,
II. from 20 to 95 mol% of an α,β-unsaturated carboxylic acid component
and
from 0 to 75 mol% of a further carboxylic acid component,
III. from 5 to 40 mol% of trimellitic acid (anhydride),
wherein the alcohol component comprises a Dicidol mixture of the isomeric compounds 3,8-bis(hydroxymethyl)tricyclo[5.2.1.0^{2,6}]decane, 4,8-bis(hydroxymethyl)tricyclo[5.2.1.0^{2,6}]decane and 5,8-bis(hydroxymethyl) tricyclo[5.2.1.0^{2,6}]decane, it being possible for each isomer to be present in a fraction of from 20 to 40% in the mixture, and the sum of the three isomers being from 90 to 100%,
and the mixture is present at from at least 10 up to 100 mol% in the alcohol component of the polyester, and the aqueous dispersion has
a) a nonvolatiles content of from 20% to 60% by weight,
b) a solvent content of from 0 to 60% by weight,
c) a pH of from 5.0 to 9.5, and
d) a viscosity at 20°C of from 20 to 500 mPas,
by reacting starting components I and II and then reacting the product with component III, at a temperature of from 150 to 270°C, and dispersing the resultant polyester resin, following neutralization, into the aqueous phase.

28. A process according to claim 27, **characterized in that** the reaction of starting components I, II and III takes place at a temperature of from 160 to 230°C, preferably at from 160 to 210°C.

29. A process according to either of claims 27 and 28, **characterized in that** the reaction takes place in an inert gas atmosphere.

30. A process according to any of claims 27 to 29, **characterized in that** the inert gas has an oxygen content of less than 50 ppm.

31. A process according to any of claims 27 to 30, **characterized in that** starting components according to any of claims 2 to 30 are used.

32. A process according to any of claims 27 to 31, **characterized in that** the amorphous unsaturated polyester resin is dispersed in water using an organic auxiliary solvent.

33. A process according to claim 32, **characterized in that** the organic auxiliary solvent is removed by distillation.

## Revendications

1. Dispersions aqueuses de résines polyester insaturées amorphes,
dans lesquelles la résine polyester est constituée de
I. un composant alcool,
II. de 20 à 95 % molaire d'un composant acide carboxylique insaturé en α,β
et
de 0 à 75 % molaire d'un autre composant acide carboxylique,
III. de 5 à 40 % molaire d'(anhydride de l') acide trimellitique,
**caractérisées en ce que**
le composant alcool est constitué d'un mélange de dicidol des composés isomères 3,8-bis(hydroxyméthyl)tricyclo [5.2.1.0^{2,6}]décane, 4,8-bis(hydroxyméthyl)tricyclo [5.2.1.0^{2,6}]décane et 5,8-bis(hydroxyméthyl)tricyclo [5.2.1.0^{2,6}]décane,
chaque isomère peut être contenu dans le mélange en une proportion de 20 à 40 % et la somme des trois isomères totalise 90 à 100 %,
et le mélange est présent à raison d'au moins 10 à 100 % molaire dans le composant alcool du polyester, et
les dispersions aqueuses présentent :
a) une teneur en constituants non volatils de 20 à 60 % en poids,
b) une teneur en solvant de 0 à 60 % en poids,
c) un pH compris entre 5,0 et 9,5,
d) une viscosité à 20°C allant de 20 à 500 mPas.

2. Dispersions aqueuses selon la revendication 1,
**caractérisées en ce qu'**
elles contiennent jusqu'à 10 % d'autres isomères du dicidol et/ou de diols trimères et/ou isomères supérieurs du produit de réaction de Diels-Alder du cyclopentadiène.

3. Dispersions aqueuses selon au moins une des revendications précédentes,
**caractérisée en ce que**
le composant alcool est constitué, à au moins 20 % molaire, de dicidol.

4. Dispersions aqueuses selon au moins une des revendications précédentes,
**caractérisées en ce que**
le composant alcool est constitué, à au moins 30 % molaire, du dicidol.

5. Dispersions aqueuses selon au moins une des revendications précédentes,
**caractérisées en ce que**
le composant alcool est constitué, à au moins 60 %, de dicidol.

6. Dispersions aqueuses selon au moins une des revendications précédentes,
**caractérisées en ce que**
le composant alcool est constitué, à 100 % molaire, de dicidol.

7. Dispersions aqueuses selon au moins une des revendications précédentes,
**caractérisées en ce que**
le composant alcool contient au maximum 90 % molaire d'autres diols et/ou polyols, linéaires et/ou ramifiés, aliphatiques et/ou cycloaliphatiques et/ou aromatiques.

8. Dispersions aqueuses selon une des revendications précédentes,
**caractérisées en ce que**
comme alcools supplémentaires, elles contiennent l'éthylèneglycol, le 1,2- et/ou 1,3-propanediol, le diéthylène-, le dipropylène-, le triéthylène-, le tétraéthylèneglycol, le 1,2- et/ou le 1,4-butanediol, le 1,3-butyléthylpropanediol, le 1,3-méthylpropanediol, le 1,5-pentanediol, le cyclohexanediméthanol, la glycérine, l'hexanediol, le néopentylglycol, le triméthyloléthane, le triméthylolpropane et/ou le pentaérythritol, le bis-phénol A, B, C, F, le norbornylèneglycol, le 1,4-benzyldiméthanol et - éthanol, le 2,4-diméthyl-2-éthylhexane-1,3-diol.

9. Dispersions aqueuses selon au moins une des revendications précédentes,
**caractérisées en ce que**
comme composant II acide insaturé en α,β, elles contiennent l'acide citraconique, l'acide fumarique, l'acide itaconique, l'acide maléique et/ou l'acide mésaconique.

10. Dispersions aqueuses selon une des revendications précédentes,
**caractérisées en ce que**
comme composant II acide insaturé en α,β, elles contiennent l'acide fumarique et/ou l'(anhydride de l') acide maléique.

11. Dispersions aqueuses selon une des revendications précédentes,
**caractérisées en ce que**
comme autres composants acides II, elles contiennent des acides mono-carboxyliques et/ou dicarboxyliques et/ou polycarboxyliques aromatiques et/ou aliphatiques et/ou cycloaliphatiques.

12. Dispersions aqueuses selon la revendication 11,
**caractérisées en ce que**
comme autres composant acides II, elles contiennent l'acide phtalique, l'acide isophtalique, l'acide téréphtalique, l'acide 1,4-cyclohexanedicarboxylique, l'acide succinique, l'acide sébacique, l'acide méthyltétra-, l'acide méthylhexahydrophtalique, l'acide hexahydrophtalique, l'acide tétrahydrophtalique, l'acide dodécanedioïque, l'acide adipique, l'acide azélaique et/ou l'acide pyromellitique, leurs anhydrides d'acide et/ou esters méthyliques ainsi que l'acide isononanoique et/ou l'acide 2-éthylhexanoïque.

13. Dispersions aqueuses selon la revendication 12,
**caractérisées en ce que**
comme autres composant acide II, elles contiennent l'acide adipique et/ou l'(anhydride de 1') acide phtalique.

14. Dispersions aqueuses selon au moins une des revendications précédentes,
**caractérisées en ce que**
les composants acides II sont constitués partiellement ou entièrement d'anhydrides et/ou d'esters alkyliques.

15. Dispersions aqueuses selon au moins une des revendications précédentes,
**caractérisées en ce que**
le composant alcool de la résine polyester est contenu dans un rapport molaire de 0,5 à 2,0 pour 1 par rapport au composant acide II.

16. Dispersions aqueuses selon au moins une des revendications précédentes,
**caractérisées en ce que**
le composant alcool de la résine polyester est contenu dans un rapport molaire de 0,8 à 1,5 pour 1 par rapport au composant acide II.

17. Dispersions aqueuses selon au moins une des revendications précédentes,
**caractérisées en ce que**
le composant alcool de la résine polyester est contenu dans un rapport molaire de 1,0 à 1,3 pour 1 par rapport au composant acide.

18. Dispersions aqueuses selon au moins une des revendications précédentes,
**caractérisées en ce que**
les résines polyester présentent un indice d'acide compris entre 1 et 200 mg de KOH/g, de préférence entre 1 et 100, en particulier entre 10 et 80 mg de KOH/g.

19. Dispersions aqueuses selon au moins une des revendications précédentes,
**caractérisées en ce que**
les résines polyester présentent un indice d'OH compris entre 1 et 200 mg de KOH/g, de préférence entre 1 et 100, de façon particulièrement préférée entre 10 et 80 mg de KOH/g.

20. Dispersions aqueuses selon au moins une des revendications précédentes,
**caractérisées en ce qu'**
on y trouve des adjuvants et additifs.

21. Dispersions aqueuses selon au moins une des revendications précédentes,
**caractérisées en ce qu'**
on y trouve des adjuvants et additifs choisis parmi les inhibiteurs, les agents neutralisants, les substances tensioactives, les capteurs d'oxygène et/ou de radicaux, les catalyseurs, les agents de protection contre la lumière, les agents éclaircissants de couleur, les photosensibilisateurs, les agents de thixotropie, les antipeaux, les antimousses, les antistatiques, les épaississants, les additifs thermoplastiques, les colorants, les pigments, les agents ignifuges, les agents de séparation internes, les charges et/ou les diluants.

22. Dispersions aqueuses selon au moins une des revendications précédentes,
**caractérisées en ce que**
le composant alcool de la résine polyester amorphe insaturée est constitué à au moins 80 % de mélange de diglycidol, et contient de l'acide fumarique et/ou de l'(anhydride de l') acide maléique.

23. Dispersions aqueuses selon l'une des revendications précédentes,
**caractérisées en ce que**
la résine polyester insaturée amorphe contient en outre de l'acide adipique et/ou de l'(anhydride de l') acide phtalique comme composant acide dans un rapport de l'acide insaturé en α,β à l'acide supplémentaire de 3 pour 1 jusqu'à 1 pour 4, de préférence de 1 pour 1 jusqu'à 1 pour 2.

24. Dispersions aqueuses selon au moins une des revendications précédentes,
**caractérisées en ce qu'**
une partie des groupes acides de la résine polyester amorphe insaturée est neutralisée.

25. Dispersions aqueuses d'une résine polyester insaturée amorphe selon l'une des revendications précédentes,
**caractérisées en ce que**
pour la neutralisation on utilise une amine et/ou une lessive inorganique.

26. Dispersions aqueuses d'une résine polyester insaturée amorphe selon l'une des revendications précédentes,
**caractérisées en ce que**
le degré de neutralisation se situe entre 0,3 et 1,2, de préférence entre 0,4 et 1,1, de façon particulièrement préférée entre 0,6 et 1,05.

27. Procédé de production de dispersions aqueuses de résines polyester insaturées amorphes,
dans lequel la résine polyester est constituée de
I. un composant alcool,
II. de 20 à 95 % molaire d'un composant acide carboxylique insaturé en α,β
et
de 0 à 75 % molaire d'un autre composant acide carboxylique,
III. de 5 à 40 % molaire d'(anhydride de l') acide trimellitique,
et dans lequel le composant alcool est constitué d'un mélange de dicidol des composés isomères 3,8-bis(hydroxyméthyl)tricyclo [5.2.1.0^{2,6}]décane, 4,8-bis(hydroxyméthyl)tricyclo [5.2.1.0^{2,6}]décane et 5,8-bis(hydroxyméthyl)tricyclo [5.2.1.0^{2,6}]décane,
chaque isomère peut être contenu dans le mélange en une proportion de 20 à 40 % et la somme des trois isomères totalise 90 à 100 %,
et le mélange est présent au moins à 10 à 100 % molaire dans le composant alcool du polyester,
et les dispersions aqueuses présentent
a) une teneur en constituants non volatils de 20 % en poids à 60 % en poids,
b) une teneur en solvant de 0 à 60 % en poids,
c) un pH compris entre 5,0 et 9,5,
d) une viscosité à 20°C de 20 à 500 mPas,
par réaction des composants de départ I. et II. puis réaction avec le composant III. à une température de 150 à 270°C, et la résine polyester obtenue est dispersée dans la phase aqueuse après neutralisation.

28. Procédé selon la revendication 27,
**caractérisé en ce que**
la réaction des composants de départ I., II. et III. se déroule à une température de 160 à 230°C, de préférence entre 160 et 210°C.

29. Procédé selon les revendications 27 à 28,
**caractérisé en ce que**
la réaction se déroule dans une atmosphère de gaz inerte.

30. Procédé selon les revendications 27 à 29,
**caractérisé en ce que**
le gaz inerte présente une teneur en oxygène inférieure à 50 ppm.

31. Procédé selon les revendications 27 à 30,
**caractérisé en ce que**
les composants de départ sont utilisés selon les revendications 2 à 30.

32. Procédé selon les revendications 27 à 31,
**caractérisé en ce que**
la résine polyester insaturée amorphe est dispersée dans l'eau en utilisant un solvant adjuvant organique.

33. Procédé selon la revendication 32,
**caractérisé en ce qu'**
on retire par distillation le solvant adjuvant organique.
